# EUROPEAN PATENT SPECIFICATION

(11) **EP 4 587 333 B1**
(45) Date of publication and mention of the grant of the patent: **19.08.2026**
(21) Application number: 23772209.5
(22) Date of filing: 14.09.2023
(51) Int. Cl.: B64U 30/00, B64U 10/20, B64C 29/02, B64U 30/26, B64U 50/14, B64C 39/10

(54) **VERTICAL TAKEOFF AND LANDING AERIAL VEHICLE**
LUFTFAHRZEUGE MIT VERTIKALEM STARTEN UND LANDEN
VÉHICULES AÉRIENS À DÉCOLLAGE ET ATTERRISSAGE VERTICAUX

(30) Priority: 16.09.2022 EP 22382857
(43) Date of publication of application: 23.07.2025
(73) Proprietor: Linking Drones UG, 64297 Darmstadt (DE)
(72) Inventor: NUÑEZ FERNANDEZ, Alberto, 28030 Madrid (ES); HILARIO SERRANO, Eduardo, 28030 Madrid (ES); SERRANO MONTERO, Cesar, 8907 Wettswill (CH)
(74) Representative: Bardehle Pagenberg S.L.
(86) International application number: PCT/EP2023/075369
(87) International publication number: WO 2024/056836

(56) References cited:
- WO-A1-2019/241768
- CN-B- 107 499 506
- US-A- 2 988 301
- US-A- 5 034 751
- US-A1- 2012 286 102
- US-A1- 2021 339 858
- US-E- R E28 454

## Description

The present application claims the benefit of European patent application 22 382 857.5 filed on September 16th, 2022.

The present disclosure relates to vertical takeoff and landing aerial vehicles configured to transport a payload. More specifically, the present disclosure relates to vertical takeoff and landing aerial vehicles comprising a main lifting body and a propulsion assembly coupled to the main lifting body.

### BACKGROUND

The trend towards using aerial vehicles for the transport of goods and people has increased dramatically over the last decades. Vertical takeoff and landing (VTOL) vehicles on the one hand, and horizontal takeoff and landing (HTOL) vehicles on the other hand each have specific advantages and disadvantages.

Firstly, VTOL vehicles only require a relatively small surface to land and for takeoff, which allows using VTOL vehicles to transport payloads between locations with irregular terrain and confined spaces like mountains or urban areas where runways may not be used. Further, VTOL vehicles can remain stationary or nearly stationary in the air during hovering, which may be beneficial in certain phases of the flight, as in payload delivery or ground reconnaissance. On the other hand, HTOL vehicles generally have a greater aerodynamic performance during horizontal flight than VTOL vehicles.

The most common VTOL vehicles used nowadays for the transport of goods are for example helicopters and multicopters with different numbers of rotors, e.g. quadcopters. This type of VTOL vehicle can be very efficient at hovering but is generally not efficient in long horizontal flights due to low lift-to-drag ratios. Quadcopters are also popular for unmanned aerial vehicles (UAV or "drone") for the consumer market: they allow VTOL and the ability to control them in flight has been developed extensively, allowing laymen to use them.

Other VTOL vehicles used for the transport of goods and people have a first propulsion system for vertical flight and a second propulsion system for horizontal flight, which considerably increase the overall weight of the vehicle. Other VTOL vehicles have morphing characteristics, i.e. they change their external shape or configuration to adapt to different flight conditions or different stages of the flight plan. For example, many VTOL vehicles modify the orientation of the propulsion assemblies during flight by actively tilting the propulsion assembly with respect to the main body of the vehicle. Thus, the propulsion assembly of these vehicles may provide vertical impulse or lift during takeoff and landing, and horizontal impulse or thrust during cruise. Morphing aircraft generally comprise complex control systems to actuate the moving parts and control surfaces, and for this reason, morphing aircraft are generally heavier due to the additional actuators and structural components.

The moving components, the associated actuators, and joining them to the remainder of the structure securely adds significant weight to the vehicles. Therefore, most of these vehicles have large wings to provide sufficient lift to compensate for the additional weight, especially at low speeds. Therefore, this type of vehicle may not be efficient for forward flight due to the increased weight, and an excessive wetted surface area and associated friction drag. Further, vehicles with relatively large surfaces, e.g. large wings, may have stability issues during hovering, specifically in a gusty atmospheric environment.

Generally, VTOL vehicles keep their attitude during the whole flight plan, i.e. they keep the main body almost horizontal during all flight phases. There is a small group of VTOL vehicles that change their attitude from vertical, during hovering, to horizontal during cruise flight. Those vehicles also generally comprise complex and potentially relatively heavy moving components such as control surfaces.

Vehicles without complex morphing characteristics, but with control surfaces also have some inconveniences related to robustness and maintenance for non-expert operation and/or frequent use.

Document WO2019/241768 discloses a piloted vertical take-off and landing vehicle comprising a disc-shaped blended wing-body with a plurality of thruster pairs arranged in a quadrant layout around the centre wing-body.

In a particular embodiment, WO2019/241768 discloses that the thruster pairs located on the suction side of the wing-body may be angled away from the pilot opening to leave a wider space for the access of the pilot. Thus, the vehicle may define a disc-shaped body with a central cockpit and two lateral thruster pairs located in the suction side of the disc-shaped body. This results in a wing-body geometry which may have reduced aerodynamic efficiency during certain phases of the flight.

US 2012/0286102 discloses a manned or unmanned aerial vehicle adapted for vertical take-off and landing using the same set of engines for takeoff and landing as well as for forward flight. US2021/0339858 discloses a vertical take-off and landing aircraft for low-pressure hydrogen transport having all propeller rotational axes formed parallel with each other with respect to the fuselage.

The present disclosure aims to provide improvements in the design and structure of aerial vehicles configured to transport goods or people. More precisely, the present disclosure provides an aerial vehicle that is efficient during forward flight, whereas at the same time has the landing and takeoff benefits of VTOL vehicles.

### SUMMARY

In a first aspect, a vertical takeoff and landing aerial vehicle configured to transport a payload is provided. The vehicle comprises a main lifting body and a propulsion assembly coupled to the main lifting body. The main lifting body comprises a substantially airfoil shaped cross-section. Further, the main lifting body extends laterally from a first tip to a second tip and has a pressure side and a suction side. Additionally, the main lifting body is configured to store the payload in an interior space of the main lifting body. The propulsion assembly of the vehicle comprises four thrusters. Two central thrusters are located at the suction side and two lateral thrusters are located at the pressure side. Further, the two lateral thrusters at the pressure side are located closer to the tips of the main lifting body than the central thrusters.

In accordance with this aspect, a vehicle suitable for vertical takeoff and landing, and with high efficiency during forward flight is provided. This is at least partially achieved by the capability of the vehicle to change its flight attitude, i.e. vertically oriented during takeoff and landing, and horizontally oriented during forward flight.

Further, the efficiency of the vehicle during forward flight is also enhanced by the arrangement of the propulsion assembly relative to the main lifting body, i.e. two central thrusters on the suction side and two lateral thrusters on the pressure side. More precisely, the central thrusters, which provide thrust during forward flight, also contribute to the generation of lift, in a similar manner as in rotor-blown wing aircraft: the central thrusters accelerate the flow mostly over the suction side, lowering the pressure on this side of the main lifting body. Thus, the central thrusters energize the flow on the suction side of the main lifting body relative to the flow on the pressure side. This arrangement of the central thrusters may force the airflow to follow the main lifting body and therefore it may delay flow separation. This, at the same time, allows flying the vehicle at high angles of attack (AoA), for which the corresponding isolated lifting body could experience stall conditions. Being able to fly the vehicle at high AoA can help the transition between vertical flight and horizontal flight (during take-off or landing).

Further, the lift-to-drag ratio of the aerial vehicle provided can be higher during horizontal flight than for conventional VTOL, such as multicopters. The fact that the vehicle comprises a main lifting body with a substantially airfoil shaped cross-section, i.e. a cross-section substantially corresponding to airfoil profile, considerably reduces the parasite drag of the vehicle. Further, the use of a main lifting body reduces the wetted surface area of the vehicle compared with flying wing aircraft, which results in a reduction in friction drag. In addition, the size and distribution of thrusters also contributes to reducing the parasite drag of the vehicle.

Additionally, the lateral thrusters located at the pressure side can reduce the magnitude of the tip vortices that naturally originate in a three-dimensional wing or lifting body. The position of the lateral thrusters closer to the tips of the main lifting body accelerates the airflow locally towards the thruster and avoids a part of the air flow from the pressure side passing towards the suction side and thereby can reduce vortices.

Further, the lateral thrusters, which are relatively far from a longitudinal central axis of the vehicle, can provide yaw control during forward flight and roll control during hovering flight, by adjusting the thrust magnitude generated by each thruster, i.e. the thrust magnitude of the left thruster(s) compared with the thrust magnitude of the right thruster(s). The provision of thrusters at the suction side and at the pressure side also allows pitching the vehicle in forward and hovering flight by adjusting the thrust magnitude generated by each thruster, i.e. the thrust magnitude of the suction side thrusters compared with the thrust magnitude of the pressure side thrusters. In examples, the aerial vehicle does not require the use of dedicated lifting surfaces or control surfaces for flight control, which simplifies maintenance and improves the robustness of the vehicle.

Furthermore, an aerial vehicle according to this aspect can provide an increase in the vehicle's maximum speed compared to existing VTOL vehicles and aircraft with large wings. This is a result of a combination of features, such as the arrangement of the propulsion assembly, the generation of lift through a lifting body and a relatively small projected area in a plane perpendicular to the flight direction.

The term "lifting body" as used throughout the present disclosure may be regarded as a configuration in which the body itself produces lift, i.e. little or no conventional wing is provided.

The term "thruster" as used throughout the present disclosure may be regarded as a component of the propulsion assembly configured to provide thrust to the vehicle, i.e. any type of rotor(s) or propeller(s) (open propeller(s), ducted fan(s), counter-rotating propellers, etc), turbine engines and jet engines, among others.

Throughout the present disclosure, "corresponding isolated lifting body" may be understood as a lifting body with the same geometric characteristics of the main lifting body of the present disclosure but without considering the aerodynamic effect of the propulsion assembly, i.e. a main lifting body isolated from the remainder of the vehicle.

Also, throughout the present disclosure, "aspect ratio" may be understood as a ratio between the width of the main lifting body (between tips) and the mean length of the main lifting body. More precisely, it may be understood as the ratio between the span (i.e. the distance from the first tip to the second tip) and the mean chord length (i.e. the mean distance between leading edge and the trailing edge of the main lifting body).

Thus, references to the "equivalent aspect ratio" may be understood as the aspect ratio that the corresponding isolated lifting body may have in order to achieve the same aerodynamic performance as the main lifting body of the present disclosure (considering the added effect of the propulsion assembly).

In the present disclosure, the shape of the airfoil profile may be defined in relation to a chord. The chord is a line connecting the leading edge of the airfoil profile with the trailing edge of the airfoil profile. Thus, the shape of the airfoil profile may be defined in the form of x and y coordinates from the chord. Likewise, the thickness of an airfoil profile refers to the maximum distance between the suction side and the pressure side of the airfoil, measured perpendicularly to the chord, and it is generally expressed as a fraction of the chord length.

Also, in the present disclosure, the orientation of the vehicle in the three-dimensional space is defined using three perpendicular axes. The central axis through the main lifting body that is aligned with the direction of motion of the vehicle is the longitudinal axis or x-axis. In cruise, the longitudinal axis is substantially horizontal. In take-off and in landing, the longitudinal axis is substantially vertical.

The axis running from the suction side to the pressure side of the main lifting body, and that is perpendicular to the longitudinal axis is the normal axis or z-axis. In cruise, the normal axis is substantially vertically arranged, whereas during take-off and landing, the normal axis is substantially horizontal.

Finally, the axis extending substantially from one tip of the main lifting body to the other tip of the main lifting body, and is perpendicular to the longitudinal axis and to the normal axis is called the lateral axis or y-axis. Both in cruise and in take-off and landing, the lateral axis may be substantially horizontal.

During forward horizontal flight, a rotation of the vehicle about the x-axis generates a roll rotation, a rotation of the vehicle about the z-axis (vertical in this case) generates a yaw rotation, and a rotation of the vehicle about the y-axis generates pitch rotation. When the vehicle has a hovering (vertical) flight attitude e.g. during a landing or takeoff operation, a rotation of the vehicle about the x-axis (vertical in this case) generates a yaw rotation, a rotation of the vehicle about the z-axis generates a roll rotation, and a rotation of the vehicle about the y-axis generates pitch rotation.

Also, throughout the present disclosure, the term "induced drag" should be understood as a component of the overall drag originated by the vehicle, which is inherent to the generation of lift. In this regard, induced drag may be considered to comprise the drag contribution from tip vortices (or vortex drag).

In examples, at least some of the thrusters are rotors. The term "rotors" may herein be understood to refer to any assembly of rotating blades and thus covers *inter alia* fans and propellers.

Further, in some examples, the rotors are ducted rotors, e.g. the central rotors and the lateral rotors may be ducted rotors. A ducted rotor should be understood as a rotor or propeller enclosed by a substantially cylindrical duct or shroud. Ducted rotors provide higher static thrust for a given diameter than open rotors. Ducted rotors also provide impact protection for the rotating blades and improve vehicle safety in case of blade fragmentation. Further, the level of noise that radiates from a ducted rotor is generally of a smaller magnitude than the noise produced by an open rotor providing an equivalent static thrust. Thus, a propulsion assembly comprising ducted rotors is more efficient in terms of thrust generation, is safer, and generates lower noise levels than a propulsion assembly comprising open rotors.

In some examples, the diameter of the central rotors, i.e. the sum of the diameters of the central rotors, at the suction side may be at least 50 % of the span of the main lifting body, and more specifically at least 80 % of the span of the main lifting body. This provides a nearly homogenous flow distribution across the span of the main lifting body and provides a broad area with increased pressure difference relative to the pressure side of the main lifting body. This may generate a very stable lift distribution that facilitates the control of the vehicle.

Most asymmetric airfoils produce an aerodynamic torque during cruise flight that tends to pitch down the aircraft. To compensate for this torque, the lateral rotors, arranged on the pressure side, have to provide significantly more thrust than the central rotors arranged on the suction side, during cruise flight. Given this difference on the thrust needed on the different flight stages, in order to gain efficiency, in some examples, the rotors may be designed with different operational design points, i.e. they perform their maximum efficiency or thrust at different speeds. More precisely, the lateral rotors arranged at the pressure side may be designed to perform at their maximum efficiency or thrust at cruise speed. On the other hand, the central rotors arranged on the suction side are designed to perform at maximum efficiency or thrust while hovering. These design points can involve nominal motor speed, propeller diameter, propeller pitch, number of blades, etc.

In further examples, the lateral rotors are configured to rotate in opposite direction to a rotational direction of a respective tip vortex formed during flight. Thus, the lateral rotor closer to the right tip is configured to rotate in counter-clockwise direction (when seen from a front of a vehicle) and the lateral rotor closer to the left tip is configured to rotate in a clockwise direction, as these directions of the rotor rotation are opposite to the rotation direction of the tip vortex that are originated during flight. Thus, lateral rotors may reduce the magnitude of tip vortices and the overall size of the aerodynamic wake, and therefore mitigate induced drag. Note that left and right coordinates should be understood based on the forward flight direction of the vehicle.

The central rotors may also be configured to rotate in opposite directions.

Generally, control of rotation of multicopters about the central x-axis (yaw axis during hovering and roll axis during cruise) can be achieved by applying differential thrust between rotors rotating in one direction and the rotors rotating in the opposite direction.

In examples, to improve or obtain control of the vehicle rotation about the x-axis, a thrust vector of one or more of the thrusters may not be parallel with a longitudinal axis of the main lifting body, such that the thrust vector generates a torque about the longitudinal axis. In these cases, the thrust vector generates a torque about the longitudinal axis of the main lifting body that can enhance the usual control torque described above.

The thrust vector of one or more of the thrusters may be tilted about an (imaginary) axis, which connects the x-axis of the vehicle with a central axis of the thruster and is perpendicular to the x-axis. The rotation component about this axis may be between 0.5 and 15 degrees. In examples, tilting of the thrusters may have other rotation components. The direction of the tilted angle may depend on the direction of the torque required from each thruster. In the case of rotatory thrusters, the torque required may coincide with the torque they naturally produce.

In examples, the aspect ratio of the vehicle may be below 4, and more specifically below 1.5. The aspect ratio may thus be significantly lower than in prior art vehicles. This is because efficient flight can be achieved with examples of the present disclosure with lower aspect ratios due to the configuration of the rotors. The aspect ratio of a wing or a lifting body with a given airfoil profile can be used as a proxy for several performance parameters, such as the lift-to-drag ratio. As such, one can construct an equivalent aspect ratio considering the measured performance parameters of the main lifting body together with the effect of the propulsion assembly. In examples, the equivalent aspect ratio of the vehicle may be between 10 % and 30 % higher than the aspect ratio based on main lifting body dimensions because of the contribution of the arrangement of the propulsion assembly to the performance of the vehicle, for example in the lift-to-drag ratio.

In examples, the main lifting body may comprise cross-sections at different span locations defining different airfoil profiles, e.g. the chord and/or geometry of the airfoil profile at different span locations may vary. Thus, the main lifting body may have an average chord length and a plurality of local chord lengths. The same applies to any other parameter associated with an airfoil profile, e.g. chamber, thickness, etc.

In some examples, the maximum thickness of the airfoil profile may be more than 10 % of an average chord length of the airfoil profile, and more specifically more than 15 % of an average chord length. Having a relatively thick airfoil profile provides room to store the payload inside the main lifting body.

In examples, the main lifting body may define a sweep angle of between 5 to 45 degrees.

In examples, the vehicle may be an electrical vehicle and the main lifting body may comprise an energy storage unit (e.g. battery) to feed the propulsion assembly.

In some examples, the vehicle may be an unmanned vehicle controlled from a ground station. Alternatively, the vehicle may be an autonomous unmanned vehicle.

In some examples, the vehicle may be configured to transport passengers.

### BRIEF DESCRIPTION OF THE DRAWINGS

Non-limiting examples of the present disclosure will be described in the following, with reference to the appended figures, in which:
Figure 1 schematically illustrates a perspective top view of an example of an aerial vehicle according to the present disclosure;
Figure 2 schematically illustrates a side view of the vehicle in figure 1 with the main lifting body represented transparent;
Figure 3 schematically illustrates a front view of the aerial vehicle in figure 1;
Figure 4 schematically illustrates the aerial vehicle in figure 1 with illustrative streamlines;
Figure 5 schematically illustrates a bottom view of a further example of an aerial vehicle according to the present disclosure;
Figure 6 schematically illustrates a perspective side view of yet another example of an aerial vehicle according to the present disclosure;
Figure 7 schematically illustrates a top view of the aerial vehicle in figure 6;
Figure 8 schematically illustrates another example of an aerial vehicle when on the ground with a frontal lid open;
Figure 9 schematically illustrates yet another example of an aerial vehicle when on the ground with a side lid open; and
Figure 10 schematically illustrates yet another example of an aerial vehicle when on the ground with a rear lid open; and
Figure 11 schematically illustrates yet a further example of an aerial vehicle transporting passengers when on the ground; and
Figure 12 is a diagram illustrating different flight phases of the aerial vehicle.

The figures refer to example implementations and are only be used as an aid for understanding the claimed subject matter, not for limiting it in any sense.

### DETAILED DESCRIPTION OF EXAMPLES

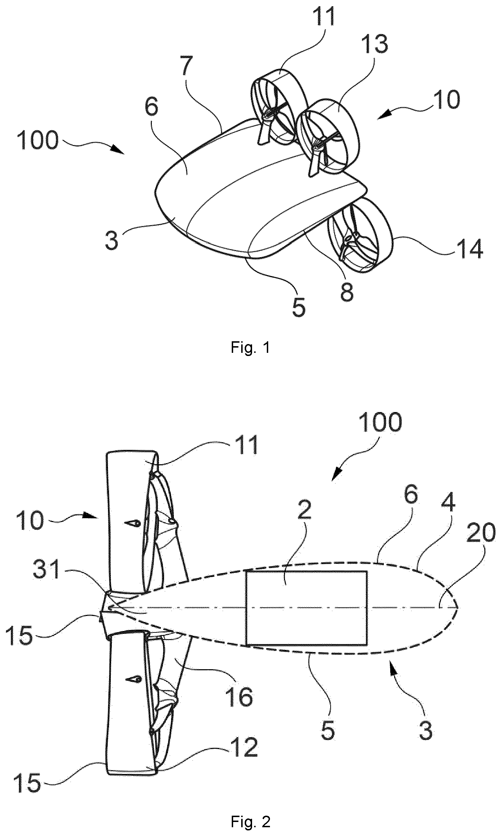

Figure 1 schematically illustrates a perspective top view of an example of an aerial vehicle 100 in cruise (horizontal) flight attitude, according to the present disclosure. The vertical takeoff aerial vehicle 100 is configured to transport a payload (not illustrated). The vehicle 100 comprises a main lifting body 3 having a substantially airfoil shaped cross-section.

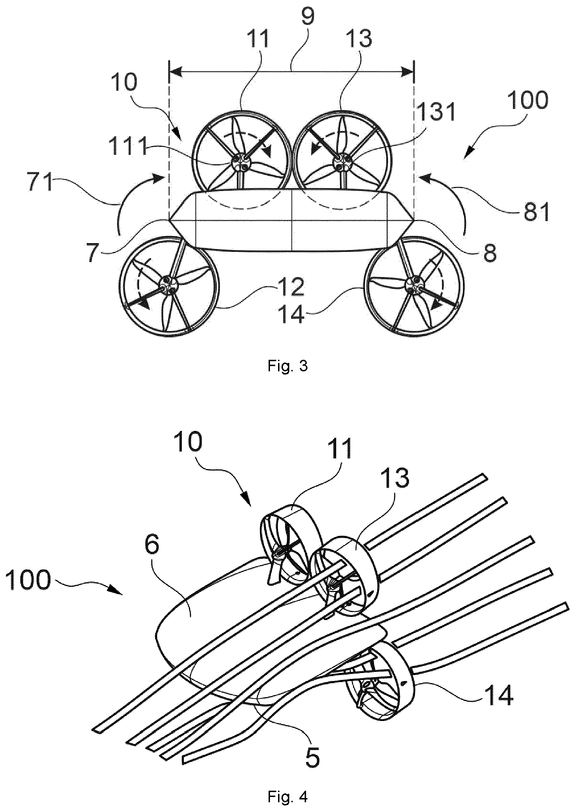

The main lifting body 3 extends laterally from a first tip 7 to a second tip 8 and has a pressure side 5 and a suction side 6. The main lifting body 3 is configured to store the payload in an interior space of the main lifting body 3. Further, the vehicle 100 comprises a propulsion assembly 10 coupled to the main lifting body 3. The propulsion assembly 10 comprises two central rotors 11, 13 located at the suction side 6 and two lateral rotors 12, 14 (see figure 3) located at the pressure side 5.

Additionally, the lateral rotors 12, 14 are located closer to the respective tips 7, 8 than the central rotors 11, 13. More precisely, a first lateral rotor 14 is located closer to the first tip 7 than any of the central rotors 11, 13, and the same applies for the second lateral rotor (not illustrated), i.e. a rotational axis of the first lateral rotor 14 is located closer to the first tip than the rotational axis of the central rotor 12.

As previously discussed, this configuration of propulsion assembly 10 relative to the main lifting body 3 results in a vertical takeoff and landing vehicle 100 with high efficiency during forward flight, and which does not require the use of movable control surfaces or lifting surfaces. The lack of control and lifting surfaces in this example reduces complexity and may reduce the maintenance tasks associated with the vehicle and provide a robust aerial vehicle.

As also illustrated in figure 1, the propulsion assembly 10 may be located at a rear end of the lifting body. This allows the main lifting body 3 of the vehicle 100 to benefit from a less disturbed incoming airflow. Further, in examples, the inlet of the propulsion assembly, i.e. the inlet of rotors 11, 12, 13, 14, may be between the leading edge and the trailing edge over (or under) the main lifting body. This limits the potential interaction between suction side flow with the lateral rotors 12, 14 and *vice versa.* In other examples, the propulsion assembly 10 may be located at a front end of the lifting body. In particular, the propulsion assembly is located near the trailing edge of the lifting body in this example.

In other examples, the propulsion assembly 10 may comprise other types of thrusters, e.g. the central thrusters may be turbine engines and the lateral thrusters may be jet engines.

Figure 2 is a side view of the vehicle 100 in figure 1. Figure 2 illustrates the main lifting body 3 as transparent to show the interior space where the payload 2 can be stored. In figure 2, a local chord of the airfoil profile 4 has been illustrated as a line connecting the leading edge with the trailing edge, and the airfoil profile 4 has been illustrated with a broken line.

In the illustrated example, the two lateral rotors 12, 14 and the two central rotors 11, 13 are ducted rotors, i.e. rotors enclosed by a substantially cylindrical duct or shroud. Instead of the term "ducted rotor", the terms "ducted fans" or "shrouded rotors" may also be used. Each of the rotors 11 - 14 may be powered by an electric motor.

The ducted rotors 11, 12, 13, 14 may be designed such as to maximize net thrust for a given rotor diameter. For this purpose, the expansion ratio of the ducted rotor, i.e. propeller disk area over outlet area of the shroud surrounding the rotor, may be between 1 and 1.15. Further, the ducted rotors 11, 12, 13, 14 may comprise a shroud with a lip geometry designed such as to avoid flow separation on the inside and on the outside of the shroud. For example, the geometry of the lip cross-section may be similar to an airfoil profile. In examples, the lip of the duct may have a tapered cross-section to increase the inlet area of the rotors.

Figure 2 also shows that the propulsion assembly 10 may be coupled to the main lifting body 3 through pylons 16. In examples, the pylons 16 may provide support to the hub of the ducted rotors 11, 12, 13, 14 and to the substantially cylindrical duct structure surrounding the rotors 11, 12, 13, 14. The pylons 16 may have a substantially airfoil shaped cross-section to reduce overall drag and to reduce flow turbulence into the rotors 11, 12, 13, 14.

In examples, the substantially cylindrical structure surrounding the rotors 11, 12, 13, 14, i.e. the shroud, may be integrally formed with the main lifting body 3. This configuration may improve the performance of the ducted rotors 11, 12, 13, 14 under certain wind conditions, since the main lifting body 3 may shelter the rotors 11, 12, 13, 14 from incoming airflow at high incidence angles with respect to the axis of rotation of the ducted rotors 11, 12, 13, 14.

As discussed in relation to figure 1, the propulsion assembly 10 can be located at or near the rear end 31 of the main lifting body 3. Thus, the propulsion assembly 10 may comprise a ground contact surface 15 configured to operate as landing gear. No separate landing gear is necessary in this example, which can reduce parasite drag and/or avoid mechanisms for stowing a landing gear.

The ground contact surface 15 is located downstream of any other component of the vehicle 100. In the example illustrated in figure 2, the ground contact surface may be located substantially behind the trailing edge of the main lifting body 3. The ground contact surface 15 may be formed by rear portions of the duct structure surrounding the rotors 11, 12, 13, 14 which are distal to a horizontal central plane of the vehicle. Thus, the dimensions and arrangement of the propulsion assembly 10 relative to the main lifting body 3 may provide a suitable and stable landing gear.

The length of the cylindrical structure along a direction substantially parallel to the axis of rotation of the rotors 11, 12, 13, 14 may be relatively short, i.e. the length may be of the same order of magnitude as the hub of the rotor. This length may be sufficient to land the aerial vehicle 100 safely in a uniform terrain. In other examples, the cylindrical structure of the ducted rotors 11, 12, 13, 14 may be extended downstream so as to avoid any protuberance from the ground coming into contact with the blades during landing. Despite the above, in order to reduce the aerodynamic influence of the shroud in cross-wind configurations the length of the shroud may be shorter than the radius of the rotor. In further examples, the rear or distal end of the shroud may be shaped to provide specific contact points, e.g. three contact points for each shroud. The contact points may be formed by local protrusions, or portions extending further rearwards than other portions of the shroud.

Further, in examples in which the propulsion assembly 10 is located at the rear end 31 of the main lifting body 3, the vehicle 100 may require less power to start the vertical flight from ground and to perform the last part of the landing manoeuvre due to a ground effect. In addition, the ground effect acts as a passive damper in the final stage of the landing, allowing faster descent rates during this stage.

Figure 3 schematically illustrates a front view of the aerial vehicle of figure 1. The span 9 of the main lifting body 3 is defined as the distance between the first tip 7 and the second tip 8.

In this example, the main lifting body 3 is symmetric with respect to a horizontal central plane and a vertical central plane. Thus, in this example the airfoil profile 4 (see figure 2) of the main lifting body 3, remains nearly constant along most of the span 9 and is a symmetric profile. Examples of such symmetric profiles are NACA 0012, or NACA 0030 among others. In some examples, the airfoil profile 4 may be substantially constant over a central region of the span representing 60% of the span, specifically more than 70 % of the span 9, and more specifically more than 80 % of the span 9. The airfoil profile being constant means herein that the geometry of the airfoil profile is substantially constant, i.e. maximum thickness of the airfoil, chord length, chamber, etc.

This may promote a substantially homogenous flow distribution over the central region of the main lifting body 3. This, at the same time, improves the stability of the vehicle 100 and reduces three-dimensional flow effects that may be originated due to surface heterogeneity. In other examples, the main lifting body 3 may not have the symmetries described for the present example.

For example, the main lifting body 3 may not be symmetric with respect to the horizontal central plane, and the airfoil profile 4 may be a chambered airfoil. More specifically, the main lifting body 3 may have a NACA 4415 profile or other NACA non-symmetric profiles. Other type of profiles, such as R.A.F, Gottingen or others can also be used. Independently of the type and characteristic of the profile, the maximum thickness of the airfoil profile may preferably be more than 10 % of an average chord length, and more specifically more than 15 % of an average chord length. This relatively thick geometry can provide enough space inside the main lifting body 3 to accommodate the payload 2 and other vehicle components such as an onboard computer, a battery, a sensor unit, or others. Further, thick airfoils provide more stability than thin airfoils, e.g. flow separation in thick airfoils occurs at the rear part of the airfoil and grows gradually upstream with increasing AoA; in contrast, thin airfoils experience a sudden flow separation at the leading edge that may compromise the performance of the vehicle 100.

The propulsion assembly 10 illustrated in figure 3 comprises two central rotors 11, 13 at the suction side. The sum of the diameters of the two central rotors 11, 13 may be of the same order of magnitude as the span 9. More precisely, the sum of the diameters of the central rotors 11, 13 may be at least 50 % of the length of the span 9, and specifically at least 80 % of the length of the span 9.

Also illustrated in figure 3, a distance between a rotor hub 111, 131 of the two central rotors 11, 13 and a centre plane of the main lifting body may be smaller than a sum of half the local maximum airfoil thickness of the lifting body and a rotor radius. This implies that a part of the swept area of the central rotors 11, 13, is hidden by a portion of the suction side 6. This can be clearly observed in figure 3, where the lower part of the central rotors 11, 13 (represented with broken line) is hidden behind the main lifting body 3. As previously discussed, this arrangement of the central rotors 11, 13 may force the airflow to follow the main lifting body 3 and therefore it may delay flow separation. This, at the same time, allows bringing the vehicle to high AoA, for which the corresponding isolated lifting body could experience stall conditions. Being able to fly the vehicle at high AoA can help transition between vertical flight and horizontal flight (during take-off or landing).

Furthermore, in the example in figure 3, the lateral rotors 12, 14 are configured to rotate in opposite direction to a rotational direction of a respective tip vortex formed during flight. Thus, the lateral rotor 12 closer to the first tip 7 is configured to rotate in counter-clockwise direction (in the frontal view) and the lateral rotor 14 closer to the second tip 8 is configured to rotate in clockwise direction. Thus, the location and rotation configuration of the lateral rotors 12, 14 counteracts the tendency of the flow to rotate from the pressure side 5 to the suction side 6, and therefore reduces the magnitude of the tip vortices. This results in a reduction in the associated vortex drag and improves the performance of the vehicle, e.g. lift-to-drag ratio. An illustrative location and direction of the tip vortices has been illustrated in figure 3 with solid arrows 71, 81, whereas the direction of rotation of the rotors 11, 12, 13, 14 has been illustrated with broken arrows.

In the illustrated example, the main lifting body has a maximum chord of approximately 45 cm, a span of approximately 40 cm and a rotor diameter of 20 cm. Further, the aerial vehicle of this example is designed as an unmanned aerial vehicle and configured to transport a payload of approximately 1 kg for a distance of 20km in less than 15 min.

It should be clear however that vehicles with other dimensions, including larger UAV's configured to transporting heavier loads at more remote locations can be also provided according to the present disclosure, as well as manned vehicles.

Figure 3 also shows that the main lifting body 3 has a zero dihedral angle, i.e. the main lifting body 3 extends along a horizontal plane. Further, in some examples, the dihedral angle may be different to zero, and more specifically it may be between 0 and 10 degrees. Thus, the tips 7, 8 of the main lifting body 3, may be located in an upper position with respect to a central part of main lifting body 3, so that a line connecting each tip 7, 8 with the central part of the main lifting body 3 forms a dihedral angle with a horizontal line.

Figure 4 shows the aerial vehicle 100 in figure 1 with illustrative flow streamlines. As has been discussed hereinbefore, the configuration of the propulsion assembly 10 relative to the main lifting body 3 may increase the flow rate over the suction side 6 with respect to the pressure side 5. This contributes to enhancing the pressure difference between the pressure side 5 and the suction side 6, and provides an aerial vehicle 100 with improved efficiency over other configurations of propulsion assemblies known in the art. Further, the lateral rotors 12, 14 located on the pressure side mitigate three-dimensional aerodynamic effects. In particular, lateral rotors 12, 14 reduce turbulence helicity in a flow region behind the tips 7, 8. Since the lateral rotors 12, 14 are arranged relatively close to the tips 7, 8 some lateral flow from the suction side 6 may circulate towards the rotors 12, 14, which can also compensate the three-dimensional aerodynamic effects to some extent and can reduce induced drag.

In examples, the main lifting body 3 of the vehicle 100 may have an average sweep angle between 5 and 45 degrees. In some examples, the sweep angle may be constant along a leading edge of the main lifting body 3. In other examples, the leading edge may define a curved line and therefore the local sweep angle may change along the leading edge. More precisely, the local sweep angle may be zero at a central portion of the main lifting body 3 and it may gradually increase towards the tips 7, 8. Examples of the aerial vehicle 100 with moderate constant sweep angle may generate a leading-edge vortex extending towards the sides of the central rotors 11, 13 that may delay flow separation at the vicinity of the tips 7, 8.

The aerial vehicle 100 of the example illustrated in figure 4 is an unmanned aerial vehicle. The vehicle 100 may receive instructions from a ground station or may be an autonomous vehicle, i.e. the flight plan may be programmed in a memory of the vehicle and executed automatically. In this example, the payload of the vehicle may comprise goods, and the vehicle may be configured to transport the payload from one location to another. More precisely, a first user may load the payload in the vehicle 100 and assign a destination for payload delivery.

Further, the aerial vehicle 100 according to the example of figure 4 may have a main lifting body with maximum chord length of approximately 45 cm, span of 40 cm and rotor diameter of 13 cm. Depending on the requirements of flight missions, aerial vehicles 100 with other dimensions may be provided. For example, smaller vehicles may be provided to transport smaller and lighter payloads, and vehicles with higher aspect ratios may be provided to transport payloads to further destinations.

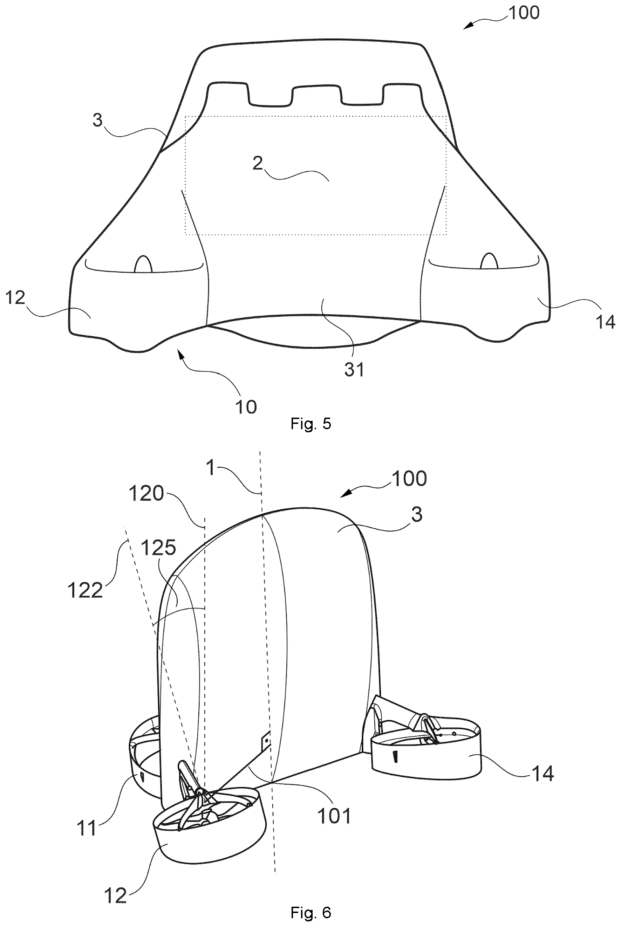

Figure 5 schematically illustrates a bottom view of a further example of an aerial vehicle 100 according to the present disclosure. In the example of figure 5, the aspect ratio of the main lifting body, i.e. the ratio between a span 9 and a mean average chord length, is below 4, and more specifically below 1.5. The example in figure 5 also comprises a propulsion assembly 10 comprising two central rotors 11, 13 and two lateral rotors 12, 14, as previously disclosed in relation with figures 1 - 4.

As a result of the arrangement of the propulsion assembly 10 relative to the main lifting body 3, the equivalent aspect ratio of the vehicle may be between 10 % and 30 % higher than the aspect ratio exclusively based on the dimensions of the main lifting body 3.

Additionally, figure 5 illustrates that the propulsion assembly 10 may be integrated in the main lifting body 3. This may be done for all rotors of the propulsion assembly 10 or for some of them. In the present example, the central rotors 11, 13 are hidden from view behind the main lifting body 3, but these are also integrated in the main lifting body 3. Such a configuration with the rotors being integrated in the main lifting body may improve the performance of the ducted rotors 11, 12, 13, 14 under certain wind conditions, since the main lifting body 3 may shelter the rotors 11, 12, 13, 14 from incoming airflow at high incidence angles with respect to the axis of rotation of the ducted rotors 11, 12, 13, 14.

As previously discussed, the propulsion assembly 10 may be located at different positions along the chord of the main lifting body 3. In the example in figure 5, the propulsion assembly 10 is located at a rear part 31 of the main lifting body 3. This reduces turbulence over the main lifting body 3 compared with a configuration wherein the rotors are at the front of the main lifting body 3. Further, it promotes a more homogenous lift distribution and delays flow separation. Further, the present location of the propulsion assembly 10 allows the aerial vehicle 100 to use the propulsion assembly as landing gear and enhances ground effect. Additionally, in scenarios wherein the AoA of the vehicle is moderate or low, i.e. below stall of a corresponding isolated lifting body, the wake generated may be relatively narrow due to the location of the rotors. This can considerably reduce the drag acting on the vehicle.

A configuration of the aerial vehicle 100 wherein the propulsion assembly 10 is located at a substantial central location of the main lifting body 3 may reduce the risk of damaging the propulsion assembly 10 during landing operations, and may bring the centre of gravity of the aerial vehicle 100 towards the leading edge of the main lifting body 3. This may at least partially balance the weight of the payload 2 when it is located at a rear part 31 of the main lifting body 3. Thus, the location of the propulsion assembly 10 may be modified e.g. according to the type of payload 2 that the aerial vehicle 100 may be expected to transport during its lifespan.

In further examples, the propulsion assembly 10 may be located substantially close to the leading edge of the main lifting body 3, either slightly upstream or downstream of the same. This configuration may also bring the centre of gravity of the aerial vehicle 100 towards the leading edge, but in a more pronounced manner. Further, this configuration may be particularly advantageous during landing with cross wind, since the rotors will not be downwind of the main lifting body 3, and therefore their aerodynamic efficiency may be improved.

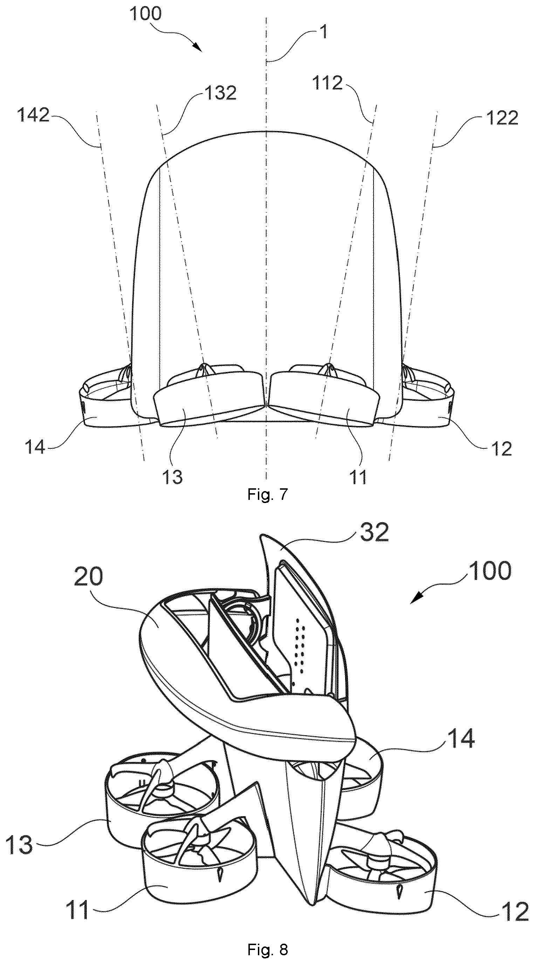

Figures 6 and 7 schematically illustrate a perspective side view and a top view respectively of yet another example of an aerial vehicle according to the present disclosure.

As illustrated in figures 6 and 7, to improve control of the vehicle rotation about the x-axis 1, the axes of rotation of the rotors 112, 122, 132, 142 may be tilted with respect to the x-axis 1 of the main lifting body 3, i.e. they are not parallel with the x-axis 1. More precisely, the rotors 11, 12, 13, 14 in this example have been tilted an angle 125 about an axis 101 connecting the centre of rotation of the rotors 11, 12, 13, 14 with the x-axis 1 of the main lifting body 3 in a direction perpendicular to the x-axis 1.

In examples, this angle 125 may be between 0.5 and 15 degrees, and more precisely between 1 and 6 degrees; and may be positive in some rotors rotating in one direction and negative in other rotors rotating in the opposite direction. Note that figure 6 only illustrates the angle 125 for the rotation about axis 101 connecting the centre of rotation of rotor 12 with the x-axis 1. Further, the axis 120 in figure 6 illustrates the axis of rotation of rotor 12 substantially parallel to the x-axis compared with the alternative axis of rotation 122. The same applies to the remaining rotors 11, 13, 14, which may be tilted the same or a different angle, resulting in a tilted axis of rotation 112, 132, 142. Thus, the rotors 11, 12, 13, 14 may produce an additional torque component which enhances stability and control of the vehicle.

To control yaw during hovering (or roll during cruise) the alternating differential thrust technique may be used. To do so, the vehicle 100 may have an even number of rotors 11, 12, 13, 14, half of which rotate in one direction and the others in the opposite direction. Further, these rotors 11, 12, 13, 14 are distributed in such a way that the vehicle 100 can maintain stationary flight with only half of the rotors rotating in the same direction contributing to the thrust, using the rest of the rotors only for stability. With these features, differential thrust can be applied, so that rotors 11, 14 rotating in one direction provide more thrust and torque than rotors 12, 13 rotating in the opposite direction. This causes the reaction torque of the rotors with more thrust to be greater than the reaction torque of the rotors with less thrust, producing as a result an absolute torque on the yaw axis of the vehicle during hovering (or roll axis during cruise) and achieving its rotation about this axis.

Further, to achieve roll control in hovering (or yaw in cruise), the asymmetric differential thrust technique may be used. To do so, the vehicle may have rotors 11, 12 distributed on one side and rotors 13, 14 on the other side (left and right) of a zy plane (vertical plane comprising the x-axis 1) passing through the centre of gravity. The moments of the two sets of rotors relative to the x-axis (coincident with the x-axis 1 during horizontal flight) have to be identical to each other to keep the vehicle 100 in balance. By providing more thrust to the set of rotors on one side of this plane with respect to the set on the other side, it is possible to create a torque around the x-axis.

In addition, to control pitch in hovering and cruise, the asymmetric differential thrust technique may also be used. To do so, the vehicle may comprise rotors 11, 13 distributed on one side of a zx plane passing through the centre of gravity and rotors 12, 14 on the other side of the zx plane. The moments of the two sets of rotors should be identical to each other to keep the vehicle in balance during hovering. By providing more thrust to the set of motors on one side of this plane, with respect to the set on the other side, a moment about the pitch axis is created to pitch the main lifting body and increase or decrease the angle of attack of the main lifting body.

Figures 8 to 10 illustrate other examples and further details of the aerial vehicles 100 according to the present disclosure. One or more of the illustrated details may be incorporated in the examples of previous figures as well.

Figure 8 shows an aerial vehicle 100 comprising an openable lid 20. The openable lid 20 in this example is pivotable and it is located at a nose 32 of the main lifting body 3. Thus, when the vehicle is in landed configuration the lid 20 may be opened, either by a user of the vehicle 100 or automatically, to provide access to the interior space of the main lifting body 3 where the payload may be stored. E.g. a book, a bottle, or any other suitably sized consumer good may be stored inside. In some examples, the lid 20 may also provide access to other components of the vehicle 100 such as an energy storage unit.

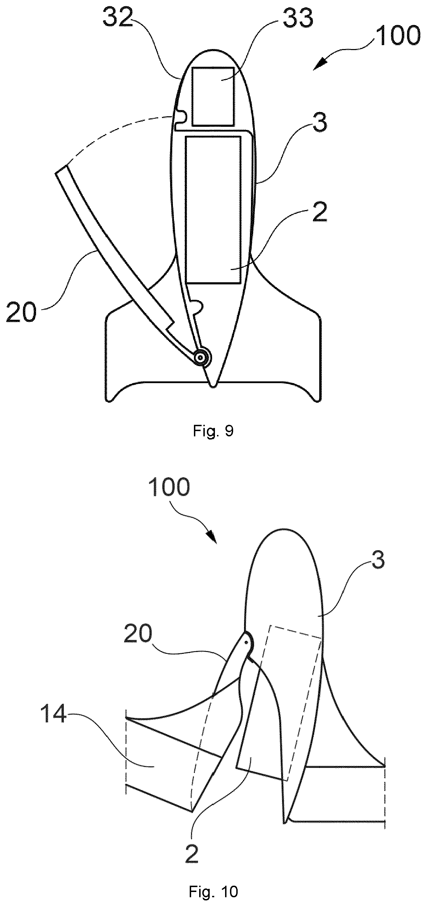

Figure 9 is a schematic cross-section of another example of the aerial vehicle 100. The vehicle 100 in this example comprises a lid 20 located at a lateral side of the main lifting body 3. More precisely, the lid 20 may be located at a pressure side of the main lifting body 3 to reduce the risk of accidental opening. Thus, the payload 2 may be accessible from a side of the vehicle 100 once the lid 20 is open. In examples, additional mechanical latches, magnetic locks or other suitable locking mechanisms may be provided.

In the present example the openable lid 20 is pivotable, but other mechanisms can be used, e.g. a sliding lid, a magnetic lid, etc. In the example in figure 9, the interior space at the nose 32 of the vehicle is occupied by other components of the vehicle such as an energy storage unit 33.

Figure 10 is a schematic lateral view of another example of the aerial vehicle 100. In the example in figure 10, the aerial vehicle 100 comprises a lid 20 located at the rear part of the main lifting body 3. One or more rotors 14 of the propulsion assembly 10 may be located at the lid 20. This may provide clearance for the delivery of the payload 2 when the lid 20 is open. Thus, to release the payload 2 the lid 20 may be opened during flight, e.g. hover, and the vehicle 100 may not require landing. The change in the thrust vector of the rotors 14 located in the lid 20 may be compensated by the remaining rotors so that the net thrust vector remains unchanged, and the vehicle 100 keeps its flight attitude. Thus, the aerial vehicle 100 allows releasing and delivering the payload from the air using gravity assisted delivery.

In other examples, the interior space of the vehicle 100 may be subdivided in more than one chamber configured to store different payloads. Thus, the vehicle 100 may be configured to open the lid 20 and release part of the payload, whereas the remaining part of the payload is stored in the vehicle for a later deliver.

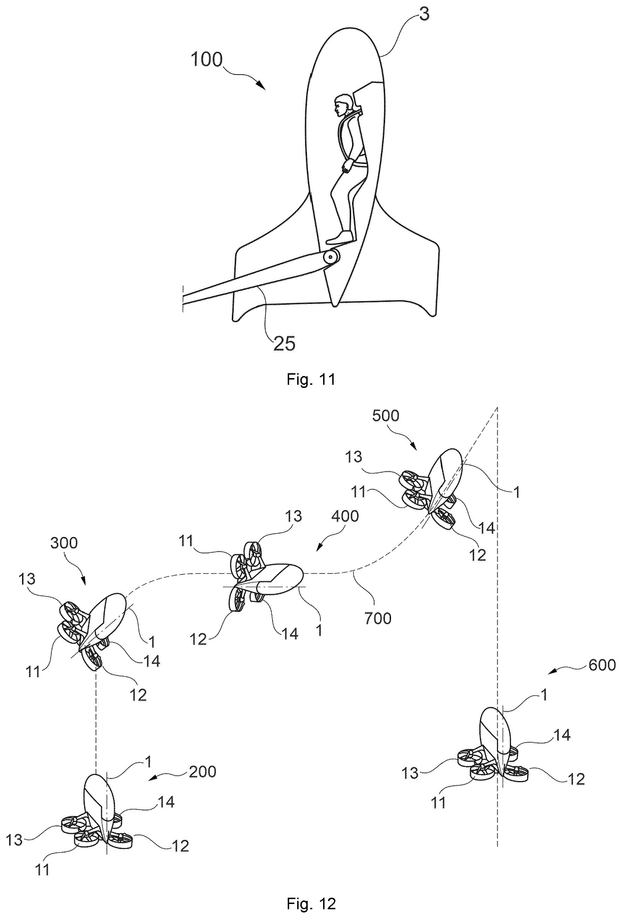

Figure 11 is a schematic cross-section of another example of the aerial vehicle 100 according to the present disclosure. The vehicle 100 in figure 11 is configured to transport at least one passenger. In examples, the vehicle 100 may further include a deployable structure 25 to access the interior space of the main lifting body 3. Further, the deployable structure 25 may be also used as a lid to close the interior space of the main lifting body 3. Further, the vehicle 100 may include at least one seat to accommodate the passenger. In some examples, the seat may be coupled to the main lifting body 3 through a gimbal so that the passenger remains in the same orientation independently of the flight phase, i.e. takeoff, cruise, landing, etc.

Figure 12 schematically illustrates different flight phases of a vehicle 100 according to the present disclosure. Note that the numerals 200, 300, 400, 500, 600 are related to each of the flight phases illustrated. More precisely, 200 refers to takeoff, 400 refers to cruise, 600 refers to landing and 300 and 500 refer to transition phases; reference sign 300 refers to a transition phase from takeoff 200 to cruise or horizontal flight 400, and reference sign 500 refers to a transition phase from cruise 400 to landing 600. An example trajectory 700 of the vehicle 100 during these flight phases has been illustrated with a broken line.

As illustrated in figure 12, the vehicle 100 is configured to perform a vertical takeoff 200. During this phase of the flight, the x-axis 1 of the vehicle may be substantially vertical. To start the takeoff, the propulsion assembly 10 provides thrust and the vehicle 100 starts a vertical motion. During phase 200, the vehicle 100 may be configured to perform a series of checks before continuing with the flight. These checks may be performed automatically or may be initiated by a pilot or a ground station. The vehicle 100 in this phase may hover while the checks are being performed. Further, the vehicle 100 may automatically or manually return to ground if any of the checks fails.

Once the vehicle 100 is flying vertically and at above a certain height from ground, the transition phase 300 may be initiated. During this phase 300, the vehicle 100 rotates towards a horizontal direction. This may be achieved by adjusting the thrust vector provided by the propulsion assembly 10. The thrust vector may be adjusted for example by modifying the thrust magnitude generated by the rotors 11, 12, 13, 14. During this phase of the flight 300, the vehicle 100 describes a curved trajectory.

In some examples, limited control of the orientation of the rotors 11, 12, 13, 14 may be provided to control thrust angle.

After the transition phase 300, the vehicle 100 may start cruising 400. In this phase 400, the vehicle 100 is oriented substantially horizontally to reduce the vehicle cross-section area perpendicular to the direction of motion and maximize lift-to-drag ratio. Further, the net thrust vector provided by the propulsion assembly 10 is substantially aligned with the direction of motion, increasing the efficiency of the vehicle 100.

Once the vehicle is substantially above its destination, a second transition may take place. The vehicle 100 may increase its AoA until it starts a vertical flight and then gradually reduce net thrust to start landing vertically. In some examples, the vehicle 100 may contact ground through a ground contact surface located in the propulsion assembly. As previously disclosed, the ground contact surface may be adapted to leave a clearance gap between rotor blades and ground. In other examples, the vehicle may not need to contact ground, e.g. to deliver the payload. In fact, the vehicle may remain hovering above ground while a lid, e.g. a rear lid as illustrated in figure 10, is being opened and the payload is released.

Although the flight path and stages in figure 12 have been illustrated with respect to an aerial vehicle 100 with the rotors 11, 12, 13, 14 located at a substantially rear location, the rotors 11, 12, 13, 14 may be located in a different position along the chord of the main lifting body 3. For example, the rotors 11, 12, 13, 14 may be located upstream of the leading edge of the main lifting body 3, which may be particularly advantageous during landing with cross wind. In fact, the rotors 11, 12, 13, 14, when located upstream of the leading edge, are not downwind of the main lifting body 3, and therefore their aerodynamic efficiency may be improved.

All technical features of the examples illustrated may be integrated into an aerial vehicle according to the present disclosure configured to be manned by qualified personal. Alternatively, the aerial vehicle may be unmanned and controlled from a ground station via a ground pilot or an automatic control unit. In further examples, the aerial vehicle may be unmanned and autonomous, i.e. the aerial vehicle may not have contact with a ground station during flight.

Although only a number of examples have been disclosed herein, other alternatives, modifications and uses thereof are possible. Thus, the scope of the present disclosure should not be limited by particular examples, but should be determined only by a fair reading of the claims that follow.

## Claims

1. A vertical takeoff and landing aerial vehicle (100) configured to transport a payload, the vehicle comprising:
a main lifting body (3) comprising a substantially airfoil shaped cross-section, and extending laterally from a first tip (7) to a second tip (8), and having a pressure side (5) and a suction side (6), wherein the main lifting body is configured to store the payload (2) in an interior space of the main lifting body, and
a propulsion assembly (10) coupled to the main lifting body and located at a rear end of the main lifting body, wherein the propulsion assembly comprises two thrusters (11, 13) located at the suction side and two thrusters (12, 14) located at the pressure side, **characterized in that** the thrusters located at the suction side are central thrusters, the thrusters located at the pressure side are lateral thrusters and the lateral thrusters are located closer to the respective tips than the central thrusters.

2. The vehicle of claim 1, wherein the propulsion assembly comprises a ground contact surface (15) configured to operate as landing gear.

3. The vehicle of claim 1 or 2, wherein at least some of the thrusters are rotors.

4. The vehicle of claim 3, wherein the rotors are ducted rotors.

5. The vehicle of claim 3 or 4, wherein a sum of diameters of the central thrusters is at least 50 % of a span of the main lifting body, and more specifically at least 80 %.

6. The vehicle of any of claims 3 - 5, wherein the lateral thrusters are rotors configured to rotate in a direction that is opposite to a rotational direction of a respective tip vortex formed during flight.

7. The vehicle of any of claims 3 - 6, wherein a thrust vector of one or more of the thrusters is not parallel with a longitudinal axis of the main lifting body, such that the thrust vector generates a torque about the longitudinal axis of the main lifting body.

8. The vehicle of any of claims 1 - 7, wherein the two lateral thrusters are configured to be more efficient at cruise speed than the two central thrusters, which are more efficient in hovering flight.

9. The vehicle of any of claims 1 - 8, wherein the main lifting body has a leading edge and a trailing edge, and wherein an inlet of the thrusters is between the leading edge and the trailing edge of the main lifting body.

10. The vehicle of any of claims 1 - 9, wherein a ratio between a span and a mean chord length of the main lifting body is below 4, and more specifically below 1.5.

11. The vehicle of any of claims 1 - 10, wherein a maximum thickness of the airfoil shaped cross-section is more than 15 % of an average chord length of the airfoil shaped cross-section.

12. The vehicle of any of claims 1 - 11, wherein the main lifting body comprises an openable lid (20).

13. The vehicle of any of claims 1 - 12, wherein a sweep angle of the main lifting body is between 5 and 45 degrees.

14. The vehicle of any of claims 1 - 13, wherein the vehicle is an unmanned vehicle.

15. The vehicle of any of claims 1 - 13, wherein the payload is at least one passenger.

## Patentansprüche

1. Ein vertikal startendes und landendes Luftfahrzeug (100), das zum Transport einer Nutzlast ausgelegt ist, wobei das Fahrzeug umfasst:
einen Haupttragkörper (3) mit einem im Wesentlichen flügelprofilförmigen Querschnitt, der sich seitlich von einer ersten Spitze (7) bis zu einer zweiten Spitze (8) erstreckt und eine Druckseite (5) sowie eine Saugseite (6) aufweist, wobei der Haupttragkörper so ausgelegt ist, dass er die Nutzlast (2) in einem Innenraum des Haupttragkörpers aufnimmt, und
eine Antriebsbaugruppe (10), die mit dem Haupttragkörper gekoppelt ist und sich an einem hinteren Ende des Haupttragkörpers befindet, wobei die Antriebsbaugruppe zwei Triebwerke (11, 13) auf der Saugseite und zwei Triebwerke (12, 14) auf der Druckseite umfasst,
**dadurch gekennzeichnet, dass** die auf der Saugseite angeordneten Triebwerke zentrale Triebwerke sind, die auf der Druckseite angeordneten Triebwerke seitlichen Triebwerke sind und die seitlichen Ttriebwerke näher an den jeweiligen Spitzen angeordnet sind als die zentralen Triebwerke.

2. Das Fahrzeug nach Anspruch 1, wobei die Antriebsbaugruppe eine Bodenkontaktfläche (15) umfasst, die so ausgebildet ist, dass sie als Fahrwerk fungiert.

3. Das Fahrzeug nach Anspruch 1 oder 2, wobei zumindest einige der Triebwerke Propeller sind.

4. Das Fahrzeug nach Anspruch 3, wobei die Propeller Mantelpropeller sind.

5. Das Fahrzeug nach Anspruch 3 oder 4, wobei die Summe der Durchmesser der zentralen Triebwerke mindestens 50 % der Spannweite des Haupttragkörpers und insbesondere mindestens 80 % beträgt.

6. Das Fahrzeug nach einem der Ansprüche 3 bis 5, wobei die seitlichen Tiebwerke Rotoren sind, die so ausgelegt sind, dass sie sich in einer Richtung drehen, die der Drehrichtung eines jeweiligen, während des Fluges gebildeten Spitzenwirbels entgegengesetzt ist.

7. Das Fahrzeug nach einem der Ansprüche 3 bis 6, wobei ein Schubvektor eines oder mehrerer der Triebwerke nicht parallel zur Längsachse des Haupttragkörpers verläuft, so dass der Schubvektor ein Drehmoment um die Längsachse des Haupttragkörpers erzeugt.

8. Das Fahrzeug nach einem der Ansprüche 1 bis 7, wobei die beiden seitlichen Triebwerke so ausgelegt sind, dass sie bei Reisegeschwindigkeit effizienter sind als die beiden mittleren Triebwerke, die im Schwebeflug effizienter sind.

9. Das Fahrzeug nach einem der Ansprüche 1 bis 8, wobei der Haupttragkörper eine Vorderkante und eine Hinterkante aufweist und wobei sich ein Einlass der Triebwerke zwischen der Vorderkante und der Hinterkante des Haupttragkörpers befindet.

10. Das Fahrzeug nach einem der Ansprüche 1 bis 9, wobei das Verhältnis zwischen der Spannweite und der mittleren Sehnenlänge des Haupttragkörpers unter 4 und insbesondere unter 1,5 liegt.

11. Das Fahrzeug nach einem der Ansprüche 1 bis 10, wobei eine maximale Dicke des flügelprofilförmigen Querschnitts mehr als 15 % einer mittleren Sehnenlänge des flügelprofilförmigen Querschnitts beträgt.

12. Fahrzeug nach einem der Ansprüche 1 bis 11, wobei der Haupthebekörper einen zu öffnenden Deckel (20) umfasst.

13. Fahrzeug nach einem der Ansprüche 1 bis 12, wobei der Pfeilwinkel des Haupthebekörpers zwischen 5 und 45 Grad liegt.

14. Fahrzeug nach einem der Ansprüche 1 bis 13, wobei es sich bei dem Fahrzeug um ein unbemanntes Fahrzeug handelt.

15. Das Fahrzeug nach einem der Ansprüche 1 bis 13, wobei die Nutzlast mindestens ein Passagier ist.

## Revendications

1. Véhicule aérien à décollage et atterrissage verticaux (100) configuré pour transporter une charge utile, le véhicule comprenant :
un corps portant principal (3) présentant une section transversale sensiblement en forme de profil aérodynamique, s'étendant latéralement d'une première extrémité (7) à une seconde extrémité (8), et comportant un côté pression (5) et un côté aspiration (6), le corps portant principal étant conçu pour loger la charge utile (2) dans un espace intérieur dudit corps portant principal, et
un ensemble de propulsion (10) couplé au corps portant principal et situé à une extrémité arrière de celui-ci, dans lequel l'ensemble de propulsion comprend deux propulseurs (11, 13) situés du côté aspiration et deux propulseurs (12, 14) situés du côté pression,
**caractérisé en ce que** les propulseurs situés du côté aspiration sont des propulseurs centraux, les propulseurs situés du côté pression sont des propulseurs latéraux et les propulseurs latéraux sont situés plus près des extrémités respectives que les propulseurs centraux.

2. Véhicule selon la revendication 1, dans lequel l'ensemble de propulsion comprend une surface de contact au sol (15) configurée pour fonctionner comme train d'atterrissage.

3. Véhicule selon la revendication 1 ou 2, dans lequel au moins certains des propulseurs sont des rotors.

4. Véhicule selon la revendication 3, dans lequel les rotors sont des rotors carénés.

5. Véhicule selon la revendication 3 ou 4, dans lequel la somme des diamètres des propulseurs centraux représente au moins 50 % de l'envergure du corps portant principal, et plus précisément au moins 80 %.

6. Véhicule selon l'une quelconque des revendications 3 à 5, dans lequel les propulseurs latéraux sont des rotors configurés pour tourner dans une direction opposée à la direction de rotation d'un vortex d'extrémité respectif formé pendant le vol.

7. Véhicule selon l'une quelconque des revendications 3 à 6, dans lequel le vecteur de poussée d'un ou de plusieurs propulseurs n'est pas parallèle à l'axe longitudinal du corps portance principal, de sorte que le vecteur de poussée génère un couple autour de l'axe longitudinal du corps portance principal.

8. Véhicule selon l'une quelconque des revendications 1 à 7, dans lequel les deux propulseurs latéraux sont configurés pour être plus efficaces à la vitesse de croisière que les deux propulseurs centraux, qui sont quant à eux plus efficaces en vol stationnaire.

9. Véhicule selon l'une quelconque des revendications 1 à 8, dans lequel le corps portant principal comporte un bord d'attaque et un bord de fuite, et dans lequel une entrée des propulseurs est située entre le bord d'attaque et le bord de fuite du corps portant principal.

10. Véhicule selon l'une quelconque des revendications 1 à 9, dans lequel le rapport entre l'envergure et la longueur de corde moyenne du corps portance principal est inférieur à 4, et plus précisément inférieur à 1,5.

11. Véhicule selon l'une quelconque des revendications 1 à 10, dans lequel l'épaisseur maximale de la section transversale en forme de profil aérodynamique est supérieure à 15 % de la longueur de corde moyenne de ladite section transversale en forme de profil aérodynamique.

12. Véhicule selon l'une quelconque des revendications 1 à 11, dans lequel le corps portance principal comprend un couvercle ouvrable (20).

13. Véhicule selon l'une quelconque des revendications 1 à 12, dans lequel l'angle de flèche du corps portance principal est compris entre 5 et 45 degrés.

14. Véhicule selon l'une quelconque des revendications 1 à 13, dans lequel le véhicule est un véhicule sans pilote.

15. Véhicule selon l'une quelconque des revendications 1 à 13, dans lequel la charge utile est d'au moins un passager.
